# EUROPÄISCHE PATENTSCHRIFT

(11) **EP 2 603 616 B1**
(45) Veröffentlichungstag und Bekanntmachung des Hinweises auf die Patenterteilung: **27.08.2014**
(21) Anmeldenummer: 11746204.4
(22) Anmeldetag: 28.07.2011
(51) Int. Cl.: C21C 5/52, F27B 3/18

(54) **SCHMELZMETALLURGISCHE ANLAGE MIT BESCHICKUNGSELEMENT**
MELT METALLURGICAL INSTALLATION COMPRISING A CHARGING ELEMENT
INSTALLATION DE MÉTALLURGIE DE FUSION PRÉSENTANT UN ÉLÉMENT DE CHARGEMENT

(30) Priorität: 16.09.2010 DE 102010040879
(43) Veröffentlichungstag der Anmeldung: 19.06.2013
(73) Patentinhaber: Siemens Aktiengesellschaft, 80333 München (DE)
(72) Erfinder: DORNDORF, Markus, 76534 Baden-Baden (DE); HUBER, Hansjörg, 77694 Kehl (DE)
(86) Internationale Anmeldenummer: PCT/EP2011/062972
(87) Internationale Veröffentlichungsnummer: WO 2012/034766

(56) Entgegenhaltungen:
- WO-A1-00/50648
- DE-A1-102009 031 648
- US-A- 5 647 288

## Beschreibung

Die vorliegende Erfindung betrifft eine schmelzmetallurgische Anlage,
- wobei die schmelzmetallurgische Anlage einen Schmelzofen zum Schmelzen von Metallschrott und einen oberhalb des Schmelzofens angeordneten Beschickungsbereich für den Schmelzofen aufweist,
- wobei die schmelzmetallurgische Anlage ein Beschickungselement aufweist, das mit für den Schmelzofen bestimmtem Metallschrott gefüllt in einer Verfahrrichtung in den Beschickungsbereich einfahrbar ist, dort entleerbar ist und in entleertem Zustand entgegen der Verfahrrichtung wieder aus dem Beschickungsbereich ausfahrbar ist.

Derartige schmelzmetallurgische Anlagen sind allgemein bekannt. Insbesondere schmelzmetallurgische Anlagen umfassend elektrische Lichtbogenöfen sind derart aufgebaut.

Beim Chargieren eines Schmelzofens kommt es in der Regel in erheblichem Umfang zu einem Auftreten von Ausqualmungen und Staubwolken, den sogenannten Sekundärabgasen. Die Ausqualmungen und Staubwolken treten bei einer üblichen Ausgestaltung des Schmelzofens ungehindert in die Produktionshalle aus, in welcher die schmelzmetallurgische Anlage angeordnet ist. Sie werden von dort üblicherweise über eine Hallenabsaugung oder ähnliches abgesaugt. Eine derartige Hallenabsaugung wird auch als Sekundärabgasabsaugung bezeichnet, da die aus dem Ofenraum stammende Hauptmenge an Abgasen, die Primärabgase, üblicherweise über eine davon getrennte Ofenabsaugung bzw. Primärabgasabsaugung im Bereich des Ofendeckels abgesaugt und nachbehandelt werden.

Die österreichische Patentschrift Nr. E 17399 B offenbart eine Vorrichtung zum Absaugen von Sekundärabgasen in Stahlwerken und Gießereien, bei der eine an einem Kran befestigte, verfahrbare Haube als Sekundärabgasabsaugung vorhanden ist.

Die österreichische Patentschrift Nr. E 40590 B offenbart eine Vorrichtung zum Absaugen von Sekundärabgasen in Stahlwerken und Gießereien, bei der ein feststehendes Haubendach und bewegliche Haubenseitenwände vorhanden sind.

Die Ausgestaltung des Standes der Technik weist verschiedene Nachteile auf. Insbesondere wirkt die Hallenabsaugung auf alle Öffnungen der Halle. Es werden daher in erheblichem Umfang andere Luftströme an- und eingesaugt. Weiterhin dauert es relativ lange, bis die Ausqualmungen und die Staubwolken abgesaugt sind. In der Zwischenzeit setzt sich in vielen Fällen eine erhebliche Menge insbesondere des Staubes auf dem Boden der Produktionshalle ab. Weiterhin wird in der Produktionshalle befindliches Personal in erheblichem Umfang belastet, teils sogar gesundheitsgefährdend.

Die deutsche Patentschrift Nr. 1063342 beschreibt einen Rauchabzug für die Absaugung von Gasen aus der Umgebung von elektrischen Lichtbogenöfen, der über den Elektroden angeordnet wird. Allerdings wird auch hier beim Chargieren des Ofens weiterhin eine hohe Menge an Sekundärabgasen in die Umgebung abgegeben.

Weitere Beispiele solcher Anlagen werden in US 564 7288 offenbart.

Die Aufgabe der vorliegenden Erfindung besteht darin, Möglichkeiten zu schaffen, mittels derer ein Austreten der Ausqualmungen und der Staubwolken in die Produktionshalle beim Chargieren eines Schmelzofens vollständig oder zumindest weitgehend vermieden werden kann.

Die Aufgabe wird durch eine schmelzmetallurgische Anlage mit den Merkmalen des Anspruchs 1 gelöst. Vorteilhafte Ausgestaltungen der schmelzmetallurgischen Anlage sind Gegenstand der abhängigen Ansprüche 2 bis 14.

Weiterhin wird die Aufgabe durch ein Verfahren mit den Merkmalen des Anspruchs 15 gelöst.

Erfindungsgemäß ist vorgesehen, eine schmelzmetallurgische Anlage der eingangs genannten Art dadurch auszugestalten,
- dass der Beschickungsbereich von einer Haube umgeben ist, so dass der Beschickungsbereich einschließlich des in den Beschickungsbereich verbrachten Beschickungselements oben und seitlich geschlossen ist, und
- dass die Haube eine Anzahl oberer Absaugöffnungen aufweist, über die in der Haube anfallende Abgase und Stäube aus der Haube absaugbar sind.

Diese Ausgestaltung der Anlage hat den Vorteil, dass auf eine Sekundärabgasabsaugung verzichtet werden kann. Es wird lediglich eine modifizierte Primärabgasabsaugung eingesetzt, um das Entstehen von Sekundärabgasen zu verhindern. Dadurch ist die nachzubehandelnde gesamte Abgasmenge deutlich verringert und der apparative Aufwand der Anlage merklich reduziert.

Dabei können die oberen Absaugöffnungen beliebig an der Haube angeordnet sein. Vorzugsweise sind die oberen Absaugöffnungen aber im oberen Bereich der Haube angeordnet. Bei dieser Ausgestaltung ist eine besonders effiziente Absaugung möglich.

Die Anzahl der Absaugöffnungen ist generell beliebig wählbar und beträgt vorzugsweise gleich 1 bis vorzugsweise gleich 10, gegebenenfalls auch mehr als 10.

Vorzugsweise sind die oberen Absaugöffnungen beidseitig einer durch die Verfahrrichtung des Beschickungselements definierten, bevorzugt lotrechten, Ebene angeordnet. Durch diese Ausgestaltung ist die Absaugung noch effizienter.

In vielen Fällen ist zwischen dem Schmelzofen und dem Beschickungsbereich ein Schacht angeordnet, in den der Metallschrott beim Entleeren des Beschickungselements gefördert wird. Vorzugsweise ist der Schacht dabei exzentrisch zum Schmelzofen oberhalb des Schmelzofens angeordnet. Unter einem "Schacht" wird hierbei und nachfolgend jegliches Aufnahmegefäß verstanden, das zur Aufnahme und Vorwärmung von Material, hier insbesondere Metallschrott, geeignet ist.

In diesem Fall weist der Schacht vorzugsweise zum Beschickungsbereich hin ein oberes Verschlusselement auf, das zum Fördern des Metallschrotts in den Schacht öffenbar und danach wieder verschließbar ist. Dabei kann das obere Verschlusselement aus einem oder mehreren in Kombination oder getrennt voneinander beweglichen Bauteilen bestehen. Es liegt im Allgemeinen geschlossen vor und wird insbesondere nur dann geöffnet, wenn Metallschrott aus dem Beschickungselement in den Schacht gefördert werden soll. So wird beim Verfahren des Beschickungselements in den und aus dem Beschickungsbereich das obere Verschlusselement bevorzugt geschlossen sein, so dass keine Abgase des Schmelzofens in den Beschickungsbereich eintreten und über diesen in die Umgebung austreten können. Das obere Verschlusselement wird insbesondere erst geöffnet, wenn das Beschickungselement über dem Schacht positioniert ist und das über den Schacht aufsteigende Abgas aus dem Schmelzofen über die Haube abgesaugt werden kann.

Der Schacht weist bevorzugt weiterhin zum Schmelzofen hin ein unteres Verschlusselement auf, das zum Chargieren des Metallschrotts aus dem Schacht in den Schmelzofen öffenbar und danach wieder verschließbar ist. Das untere Verschlusselement ermöglicht in geschlossenem Zustand eine temporäre Speicherung und Vorwärmung des Metallschrotts durch Abgase aus dem Schmelzofen im Schacht. Dies senkt den Energiebedarf und die Kosten für den Schmelzvorgang.

Ein an die oberen Absaugöffnungen angeschlossenes Absaugsystem ist bei dieser Ausgestaltung vorzugsweise derart steuerbar, dass eine Aktivität des Absaugsystems mit dem Öffnen und Schließen des oberen Verschlusselements und/oder dem Beschickungszustand des Schachts koordinierbar ist.

Bei dem erfindungsgemäßen Verfahren zur Steuerung einer Anlage mit Schacht wird ein an die oberen Absaugöffnungen angeschlossenes Absaugsystem derart gesteuert, dass eine Aktivität des Absaugsystems mit dem Öffnen und Schließen des oberen Verschlusselements und/oder dem Beschickungszustand des Schachts koordiniert wird. Auf diese Weise wird jederzeit die optimale Menge an Abgas aus dem Beschickungsbereich abgesaugt, bevor das Abgas als Sekundärabgas aus diesem austreten könnte.

In einer weiter bevorzugten Ausgestaltung der vorliegenden Erfindung ist im Schacht unterhalb des oberen Verschlusselements eine Anzahl unterer Absaugöffnungen angeordnet, über die im Schacht anfallende Abgase und Stäube aus dem Schacht absaugbar sind.

Die unteren Absaugöffnungen können insbesondere beidseitig einer durch die Verfahrrichtung des Beschickungselements definierten lotrechten Ebene angeordnet sein. Mittels der unteren Absaugöffnungen wird insbesondere eine so genannte Primärabsaugung der Primärabgase realisiert, die auch im Stand der Technik vorhanden ist, um die beim Schmelzprozess entstehenden Abgase aus dem Schmelzofen abzusaugen.

Vorzugsweise sind die oberen und die unteren Absaugöffnungen mit derselben Absaugeinrichtung verbunden. In diesem Fall sind weiterhin zumindest in Verbindungsrohren zwischen den oberen Absaugöffnungen und der Absaugeinrichtung, vorzugsweise auch in Verbindungsrohren zwischen den unteren Absaugöffnungen und der Absaugeinrichtung, - insbesondere motorisch - verstellbare Verschlussklappen angeordnet.

Insbesondere in dem Fall, dass sowohl in Verbindungsrohren zwischen den oberen Absaugöffnungen und der Absaugeinrichtung als auch in den Verbindungsrohren zwischen den unteren Absaugöffnungen und der Absaugeinrichtung - insbesondere motorisch - verstellbare Verschlussklappen angeordnet sind, sind vorzugsweise Verstellantriebe für die zwischen den oberen Absaugöffnungen und der Absaugeinrichtung angeordneten Verschlussklappen unabhängig von Verstellantrieben für die zwischen den unteren Absaugöffnungen und der Absaugeinrichtung angeordneten Verschlussklappen steuerbar.

Die Verfahrrichtung des Beschickungselements verläuft in vielen Fällen schräg von unten nach oben. Genauso kann die Verfahrrichtung aber senkrecht von unten nach oben oder umgekehrt verlaufen. Es ist möglich, dass in der Haube eine Durchtrittsöffnung für das Ein- und Ausfahren des Beschickungselements angeordnet ist. In diesem Fall ist vorzugsweise der Querschnitt der Durchtrittsöffnung bei in die Haube eingefahrenem Beschickungselement reduzierbar. Insbesondere kann die Durchtrittsöffnung verschließbar sein. Beispielsweise kann das Beschickungselement über einen Kran von oben durch eine Durchtrittsöffnung in die Haube eingesetzt werden, wobei die Durchtrittsöffnung mittels mindestens eines Schiebers öffenbar und verschließbar ist. Alternativ ist es möglich, dass die Haube sich in Horizontalrichtung so weit erstreckt, dass das Beschickungselement von unten in die Haube eintritt.

Weitere Vorteile und Einzelheiten ergeben sich aus der nachfolgenden Beschreibung von Ausführungsbeispielen in Verbindung mit den Zeichnungen. Es zeigen in Prinzipdarstellung:
- FIG 1: eine schmelzmetallurgische Anlage in der Seitenansicht,
- FIG 2: die schmelzmetallurgische Anlage von FIG 1 von oben,
- FIG 3: die schmelzmetallurgische Anlage von FIG 1 in der Frontansicht,
- FIG 4: eine schmelzmetallurgische Anlage schematisch in der Seitenansicht,
- FIG 5: die schmelzmetallurgische Anlage von FIG 4 in der Draufsicht und
- FIG 6: die schmelzmetallurgische Anlage von FIG 4 in der Frontansicht.

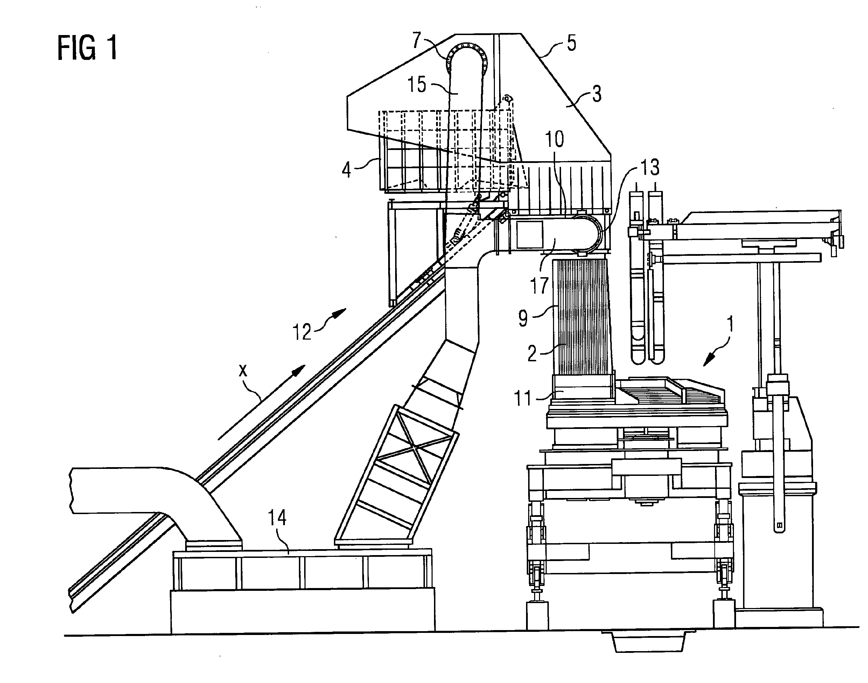

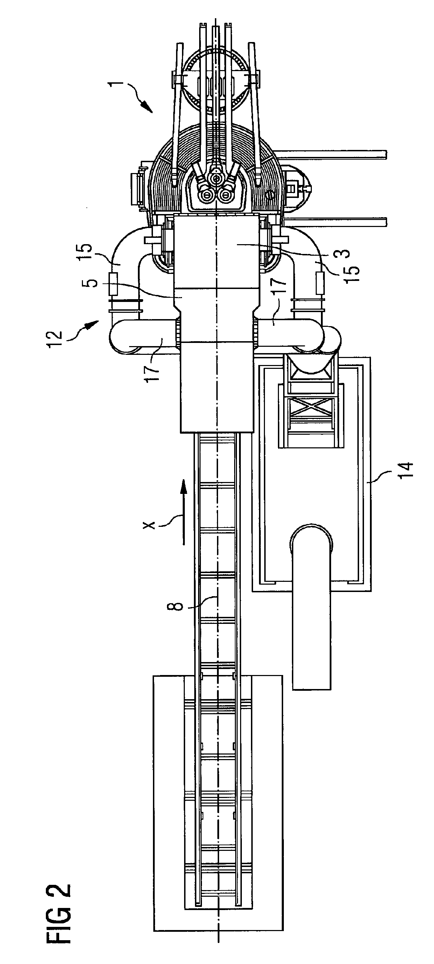

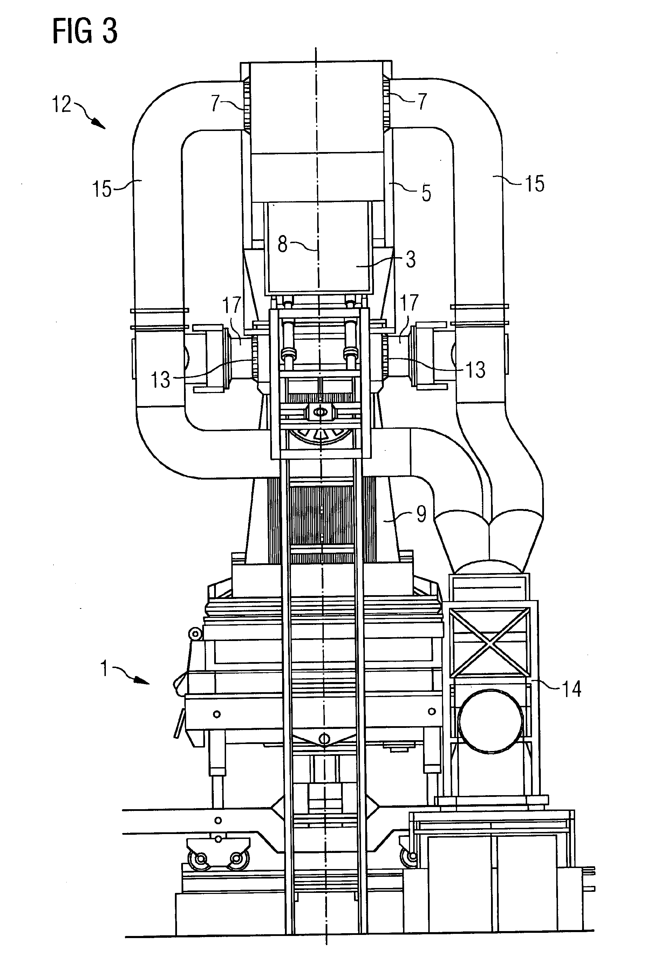

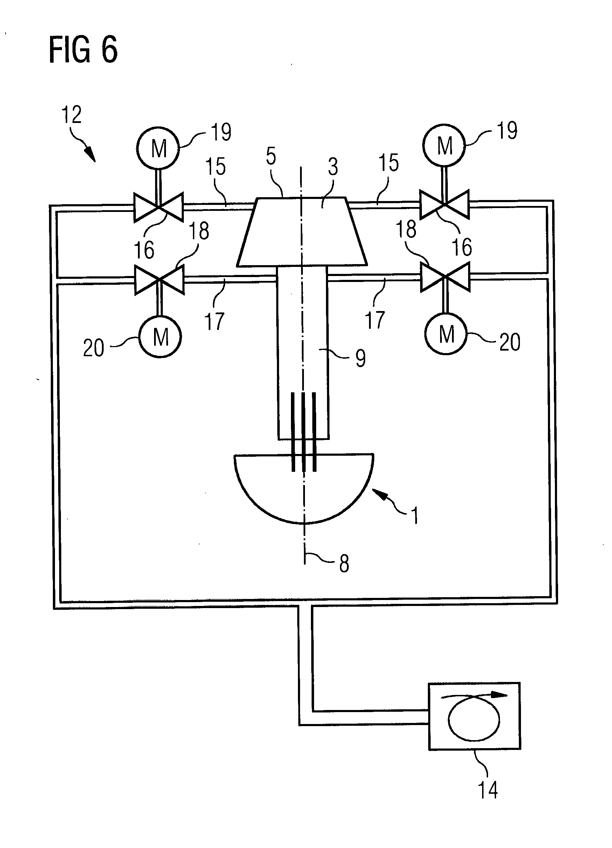

Die FIG 1 bis 6 werden nachfolgend gemeinsam erläutert.

Gemäß den FIG weist eine schmelzmetallurgische Anlage einen Schmelzofen 1 auf. Der Schmelzofen 1 dient dem Schmelzen von Metallschrott 2. Die schmelzmetallurgische Anlage weist weiterhin einen Beschickungsbereich 3 für den Schmelzofen 1 auf. Der Beschickungsbereich 3 ist oberhalb des Schmelzofens 1 angeordnet. Die schmelzmetallurgische Anlage weist weiterhin ein Beschickungselement 4 auf. Das Beschickungselement 4 ist in einer Verfahrrichtung x in den Beschickungsbereich 3 einfahrbar und entgegen der Verfahrrichtung x wieder aus dem Beschickungsbereich 3 ausfahrbar. Die Verfahrrichtung x kann in Einzelfällen horizontal verlaufen. In der Regel verläuft die Verfahrrichtung x jedoch, wie aus den FIG ersichtlich ist, schräg von unten nach oben. Das Beschickungselement 4 wird mit Metallschrott 2 gefüllt, der für den Schmelzofen 1 bestimmt ist. In diesem Zustand wird das Beschickungselement 4 in den Beschickungsbereich 3 eingefahren und dort entleert. Sodann wird es in entleertem Zustand wieder aus dem Beschickungsbereich 3 ausgefahren.

Der Beschickungsbereich 3 ist von einer Haube 5 umgeben. Dadurch ist der Beschickungsbereich 3 oben und seitlich geschlossen. Dieser Zustand gilt zwar nicht nur, aber insbesondere auch für den Fall, dass das Beschickungselement 4 in den Beschickungsbereich 3 verbracht ist.

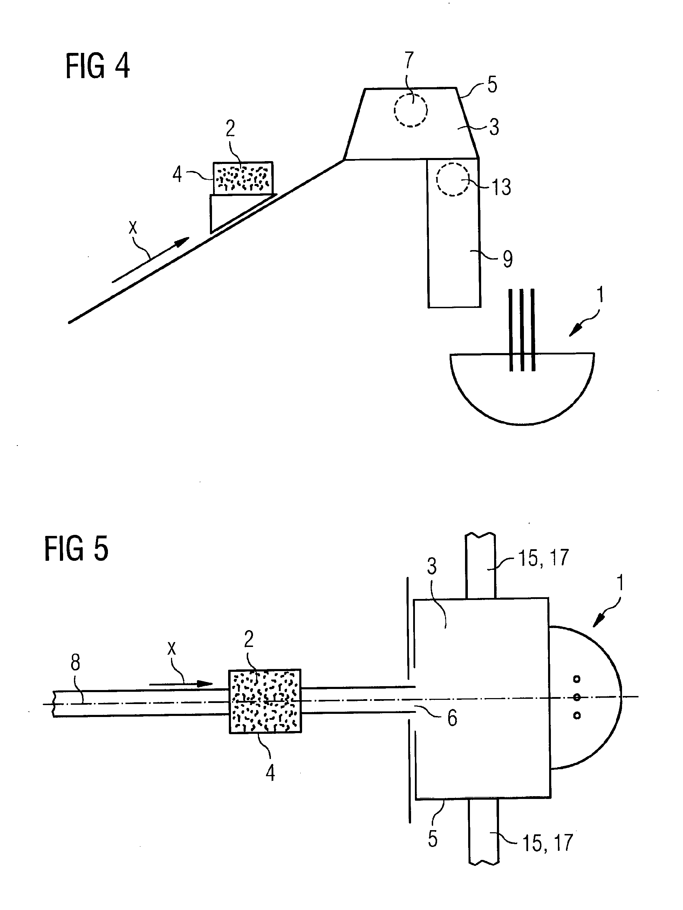

Es ist möglich, dass in der Haube 5 eine Durchtrittsöffnung 6 für das Ein- und Ausfahren des Beschickungselements 3 angeordnet ist. Diese Ausgestaltung der vorliegenden Erfindung ist in den FIG 4 bis 6 dargestellt. In diesem Fall ist es möglich, dass die Durchtrittsöffnung 6 durch das in den Beschickungsbereich 3 eingebrachte Beschickungselement 4 teilweise gefüllt ist. Vorzugsweise jedoch befindet sich das Beschickungselement 4, wenn es in den Beschickungsbereich 3 eingebracht ist, vollständig innerhalb der Haube 5. In diesem Fall wird der Querschnitt der Durchtrittsöffnung 6 in diesem Zustand, wenn also das Beschickungselement 4 in die Haube 5 eingefahren ist, vorzugsweise reduziert. Beispielsweise können zu diesem Zweck verschiebbare Wände oder entsprechende Klappen 7 vorgesehen sein. Die Dimensionierung kann derart sein, dass die Durchtrittsöffnung 6 vollständig verschlossen wird.

Vorzugsweise jedoch - siehe die FIG 1 bis 3 - erstreckt sich die Haube 5 in Horizontalrichtung soweit, dass das Beschickungselement 4 von unten in die Haube 5 eintritt. Dadurch ist es nicht erforderlich, im Seitenbereich der Haube 5 eine Durchtrittsöffnung vorzusehen. Falls erforderlich, kann der Eintrittsbereich, durch den das Beschickungselement 4 in die Haube 5 eintritt, auch bei dieser Ausgestaltung reduzierbar, insbesondere verschließbar sein.

Die Haube 5 weist eine Anzahl oberer Absaugöffnungen 7 auf. Die Anzahl kann eins sein. Die oberen Absaugöffnungen 7 sind vorzugsweise im oberen Bereich der Haube 5 (also an der höchsten Stelle der Haube 5) angeordnet.

Die oberen Absaugöffnungen 7 können an beliebiger Stelle der Haube 5 angeordnet sein, beispielsweise auf der Oberseite der Haube 5 oder in deren Seitenbereichen. Die oberen Absaugöffnungen 7 können insbesondere beidseits einer lotrechten Ebene 8 angeordnet sein, die durch die Verfahrrichtung x des Beschickungselements 4 definiert ist. Über die oberen Absaugöffnungen 7 sind Abgase und Stäube, die in der Haube 5 anfallen, aus der Haube 5 absaugbar.

In vielen Fällen ist zwischen dem Schmelzofen 1 und dem Beschickungsbereich 3 ein Schacht 9 angeordnet. In diesem Fall wird der Metallschrott 2 beim Entleeren des Beschickungselements 4 nicht direkt in den Schmelzofen 1, sondern zunächst in den Schacht 9 gefördert. Der Schacht 9 weist zu diesem Zweck ein oberes Verschlusselement 10 und ein unteres Verschlusselement 11 auf. Das obere Verschlusselement 10 ist zum Beschickungsbereich 3 hin angeordnet. Es kann geöffnet und danach wieder verschlossen werden. Es wird geöffnet, wenn der Metallschrott 2 aus dem Beschickungselement 4 in den Schacht gefördert werden soll. Ansonsten ist es geschlossen. Das untere Beschickungselement 11 ist zum Schmelzofen 1 hin angeordnet. Es kann ebenfalls geöffnet und geschlossen werden. Es wird geöffnet, wenn der Schmelzofen 1 chargiert wird. Ansonsten wird es geschlossen.

Die Gefahr, dass Abgase, Stäube, Ausqualmungen usw. in die Haube 5 eintreten und eventuell aus der Haube 5 austreten, besteht insbesondere dann, wenn das obere Verschlusselement 10 geöffnet ist oder der Schacht 9 leer ist. Vorzugsweise wird daher ein Absaugsystem 12, das an die oberen Absaugöffnungen 7 angeschlossen ist, derart gesteuert, dass eine Aktivität des Absaugsystems 12 mit dem Öffnen und Schließen des oberen Verschlusselements 10 und/oder dem Beschickungszustand des Schachts 9 koordiniert ist. Insbesondere kann das Absaugsystem 12 in den beiden oben genannten Fällen aktiviert (bzw. maximal aktiviert) sein, ansonsten deaktiviert (bzw. nur teilaktiviert).

In der Regel ist im Schacht 9 unterhalb des oberen Verschlusselements 10 eine Anzahl unterer Absaugöffnungen 13 angeordnet. Die unteren Absaugöffnungen 13 können - analog zu den oberen Absaugöffnungen 7 - insbesondere beidseitig der bereits erwähnten lotrechten Ebene 8 angeordnet sein. Über die unteren Absaugöffnungen 13 sind Abgase und Stäube, die im Schacht 9 anfallen, aus dem Schacht 9 absaugbar.

Es ist möglich, dass an die unteren Absaugöffnungen 13 eine eigene Absaugeinrichtung angeschlossen ist, die unabhängig von dem Absaugsystem 12 für die oberen Absaugöffnungen 7 betreibbar ist. Vorzugsweise jedoch sind die oberen und die unteren Absaugöffnungen 7, 13 mit derselben Absaugeinrichtung 14 verbunden. In diesem Fall sind zumindest in Verbindungsrohren 15, die zwischen den oberen Absaugöffnungen 7 und der Absaugeinrichtung 14 angeordnet sind, motorisch verstellbare Verschlussklappen 16 angeordnet. Vorzugsweise sind auch in Verbindungsrohren 17, die zwischen den unteren Absaugöffnungen 13 und der Absaugeinrichtung 14 angeordnet sind, motorisch verstellbare Verschlussklappen 18 angeordnet.

Es ist möglich, dass eine Verstellung der Verschlussklappen 16 mit einer Verstellung der Verschlussklappen 18 stets gekoppelt ist. In diesem Fall können die Verschlussklappen 16 einerseits und die Verschlussklappen 18 andererseits nur gegenläufig zueinander verstellt werden. Vorzugsweise sind Verstellantriebe 19 für die zwischen den oberen Absaugöffnungen 7 und der Absaugeinrichtung 14 angeordneten Verschlussklappen 16 jedoch unabhängig von Verstellantrieben 20 für die zwischen den unteren Absaugöffnungen 13 und der Absaugeinrichtung 14 angeordneten Verschlussklappen 18 steuerbar. In diesem Fall sind mindestens drei verschiedene Betriebszustände möglich, nämlich
- Verschlussklappen 16 geöffnet, Verschlussklappen 18 geschlossen,
- Verschlussklappen 16 geschlossen, Verschlussklappen 18 geöffnet und
- Verschlussklappen 16 geöffnet und Verschlussklappen 18 geöffnet.

Eventuell kann auch der Betriebszustand möglich sein, dass sowohl die Verschlussklappen 16 als auch die Verschlussklappen 18 geschlossen sind.

Die vorliegende Erfindung weist viele Vorteile auf. Insbesondere wird ein Austreten von Sekundärabgasen wie Ausqualmungen, Staub, Abgasen usw. in eine Produktionshalle, in der die metallurgische Anlage angeordnet ist, nahezu vollständig unterbunden.

Die obige Beschreibung dient ausschließlich der Erläuterung der vorliegenden Erfindung. Für einen Fachmann ergibt sich dabei ohne weiteres, dass gemäß der Erfindung verschiedenste schmelzmetallurgische Anlagen in unterschiedlichsten Ausführungsformen im Hinblick auf den Schmelzofen, den Beschickungsbereich, das Beschickungselement und die Haube ausgebildet werden können.

## Patentansprüche

1. Schmelzmetallurgische Anlage,
- wobei die schmelzmetallurgische Anlage einen Schmelzofen (1) zum Schmelzen von Metallschrott (2) und einen oberhalb des Schmelzofens (1) angeordneten Beschickungsbereich (3) für den Schmelzofen (1) aufweist,
- wobei die schmelzmetallurgische Anlage ein Beschickungselement (4) aufweist, das mit für den Schmelzofen (1) bestimmtem Metallschrott (2) gefüllt in einer Verfahrrichtung (x) in den Beschickungsbereich (3) einfahrbar ist, dort entleerbar ist und in entleertem Zustand entgegen der Verfahrrichtung (x) wieder aus dem Beschickungsbereich (3) ausfahrbar ist,
- wobei der Beschickungsbereich (3) von einer Haube (5) umgeben ist, so dass der Beschickungsbereich (3) einschließlich des in den Beschickungsbereich (3) verlorachten βeschickungselements (4) oben und seitlich geschlossen ist,
- wobei die Haube (5) eine Anzahl oberer Absaugöffnungen (7) aufweist, über die in der Haube (5) anfallende Abgase und Stäube aus der Haube (5) absaugbar sind,
- wobei zwischen dem Schmelzofen (1) und dem Beschickungsbereich (3) ein Schacht (9) zur Aufnahme und Vorwärmung des Metallschrotts (2) angeordnet ist, in den der Metallschrott (2) beim Entleeren des Beschickungselements (4) gefördert wird,
- wobei der Schacht (9) zum Beschickungsbereich (3) hin ein oberes Verschlusselement (10) aufweist, das zum Fördern des Metallschrotts (2) in den Schacht (9) öffenbar und danach wieder verschließbar ist und der Schacht (9) zum Schmelzofen (1) hin ein unteres Verschlusselement (11) aufweist, das zum Chargieren des Metallschrotts (2) aus dem Schacht (9) in den Schmelzofen (1) öffenbar und danach wieder verschließbar ist, und wobei
- ein an die oberen Absaugöffnungen (7) angeschlossenes Absaugsystem (12) derart steuerbar ist, dass eine Aktivität des Absaugsystems (12) mit dem Öffnen und Schließen des oberen Verschlusselements (10) und/oder dem Beschickungszustand des Schachts (9) koordinierbar ist.

2. Anlage nach Anspruch 1,
**dadurch gekennzeichnet,**
**dass** die oberen Absaugöffnungen (7) im oberen Bereich der Haube (5) angeordnet sind.

3. Anlage nach Anspruch 1 oder 2,
**dadurch gekennzeichnet,**
**dass** die oberen Absaugöffnungen (7) beidseitig einer durch die Verfahrrichtung (x) des Beschickungselements (4) definierten lotrechten Ebene (8) angeordnet sind.

4. Anlage nach Anspruch 1, 2 oder 3,
**dadurch gekennzeichnet,**
**dass** der Schacht (9) exzentrisch zum Schmelzofen (1) oberhalb des Schmelzofens (1) angeordnet ist.

5. Anlage nach einem der Ansprüche 1 bis 4,
**dadurch gekennzeichnet,**
**dass** im Schacht (9) unterhalb des oberen Verschlusselements (10) eine Anzahl unterer Absaugöffnungen (13) angeordnet ist, über die im Schacht (9) anfallende Abgase und Stäube aus dem Schacht (9) absaugbar sind.

6. Anlage nach Anspruch 5,
**dadurch gekennzeichnet,**
**dass** die unteren Absaugöffnungen (13) beidseitig einer durch die Verfahrrichtung (x) des Beschickungselements (4) definierten lotrechten Ebene (8) angeordnet sind.

7. Anlage nach Anspruch 5 oder 6,
**dadurch gekennzeichnet,**
**dass** die oberen und die unteren Absaugöffnungen (7, 13) mit derselben Absaugeinrichtung (14) verbunden sind und dass zumindest in Verbindungsrohren (15) zwischen den oberen Absaugöffnungen (7) und der Absaugeinrichtung (14) verstellbare Verschlussklappen (16) angeordnet sind.

8. Anlage nach Anspruch 7,
**dadurch gekennzeichnet,**
**dass** auch in Verbindungsrohren (17) zwischen den unteren Absaugöffnungen (13) und der Absaugeinrichtung (14) verstellbare Verschlussklappen (18) angeordnet sind.

9. Anlage nach Anspruch 8,
**dadurch gekennzeichnet,**
**dass** Verstellantriebe (19) für die zwischen den oberen Absaugöffnungen (7) und der Absaugeinrichtung (14) angeordneten Verschlussklappen (16) unabhängig von Verstellantrieben (20) für die zwischen den unteren Absaugöffnungen (13) und der Absaugeinrichtung (14) angeordneten Verschlussklappen (18) steuerbar sind.

10. Anlage nach einem der Ansprüche 1 bis 9,
**dadurch gekennzeichnet,**
**dass** die Verfahrrichtung (x) schräg von unten nach oben verläuft, dass in der Haube (5) eine Durchtrittsöffnung (6) für das Ein- und Ausfahren des Beschickungselements (4) angeordnet ist und dass der Querschnitt der Durchtrittsöffnung (6) bei in die Haube (5) eingefahrenem Beschickungselement (4) reduzierbar ist, insbesondere die Durchtrittsöffnung (6) verschließbar ist.

11. Anlage nach einem der Ansprüche 1 bis 10,
**dadurch gekennzeichnet,**
**dass** die Verfahrrichtung (x) schräg von unten nach oben verläuft und dass die Haube (5) sich in Horizontalrichtung so weit erstreckt, dass das Beschickungselement (4) von unten in die Haube (5) eintritt.

12. Verfahren zur Steuerung einer Anlage nach einem der Ansprüche 1 bis 11,
**dadurch gekennzeichnet,**
**dass** das an die oberen Absaugöffnungen (7) angeschlossene Absaugsystem (12) derart gesteuert wird, dass eine Aktivität des Absaugsystems (12) mit dem Öffnen und Schließen des oberen Verschlusselements (10) und/oder dem Beschickungszustand des Schachts (9) koordiniert wird.

## Claims

1. Melt metallurgical installation,
- wherein the melt metallurgical installation comprises a melting furnace (1) for melting scrap metal (2) and a charging region (3) for the melting furnace (1) arranged above the melting furnace (1),
- wherein the melt metallurgical installation comprises a charging element (4), which has been filled with scrap metal (2) intended for the melting furnace (1) and can be moved in a movement direction (x) into the charging region (3) where it can be emptied and then moved again, in the empty state, against the movement direction (x) out of the charging region (3),
- wherein the charging region (3) is enclosed by a hood (5) such that the charging region (3), including the charging element (4) which has been placed in the charging region (3), is closed at the top and on the sides,
- wherein the hood (5) comprises a number of upper extraction openings (7) through which the waste gases and dust developing in the hood (5) can be extracted out of the hood (5),
- wherein between the melting furnace (1) and the charging region (3) is arranged a chute (9) for receiving and preheating scrap metal (2) into which the scrap metal (2) is conveyed when the charging element (4) is emptied,
- wherein towards the charging region (3) the chute (9) comprises an upper closure element (10) which can be opened for conveying the scrap metal (2) into the chute (9) and can then be closed again and towards the melting furnace (1) the chute (9) comprises a lower closure element (11) which can be opened for loading the scrap metal (2) from the chute (9) into the melting furnace (1) and can then be closed again, and wherein
- an extraction system (12) connected to the upper extraction openings (7) can be controlled in such a way that an activity of the extraction system (12) can be coordinated with the opening and closing of the upper closure element (10) and/or the charging state of the chute (9).

2. Installation according to claim 1,
**characterised in that**
the upper extraction openings (7) are arranged in the upper region of the hood (5).

3. Installation according to claim 1 or 2,
**characterised in that**
the upper extraction openings (7) are arranged on either side of a vertical plane (8) defined by the movement direction (x) of the charging element (4).

4. Installation according to claim 1, 2 or 3,
**characterised in that**
the shaft (9) is arranged eccentrically with respect to the melting furnace (1) and above the melting furnace (1).

5. Installation according to one of claims 1 to 4,
**characterised in that**
a number of lower extraction openings (13) is arranged in the chute (9) below the upper closure element (10), through which openings waste gases and dust developing in the chute (9) can be extracted out of the chute (9).

6. Installation according to claim 5,
**characterised in that**
the lower extraction openings (13) are arranged on either side of a vertical plane (8) defined by the movement direction (x) of the charging element (4).

7. Installation according to claim 5 or 6,
**characterised in that**
the upper and lower extraction openings (7, 13) are connected to the same extraction device (14), and **in that** adjustable closure flaps (16) are arranged at least in connecting pipes (17) between the upper extraction openings (7) and the extraction device (14).

8. Installation according to claim 7,
**characterised in that**
adjustable closure flaps (18) are also arranged in connecting pipes (17) between the lower extraction openings (13) and the extraction device (14).

9. Installation according to claim 8,
**characterised in that**
adjustment drives (19) for the closure flaps (16) arranged between the upper extraction openings (7) and the extraction device (14) can be controlled independently of adjustment drives (20) for the closure flaps (18) arranged between the lower extraction openings (13) and the extraction device (14).

10. Installation according to one of claims 1 to 9,
**characterised in that**
the movement direction (x) runs obliquely upwards, **in that** an opening (6) for moving the charging element (4) in and out is arranged in the hood (5), and **in that** the cross-section of the opening (6) can be reduced when the charging element (4) has been moved into the hood (5), and the opening (6) can in particular be closed.

11. Installation according to one of claims 1 to 10,
**characterised in that**
the movement direction (x) runs obliquely upwards, and **in that** the hood (5) extends in the horizontal direction to the extent that the charging element (4) enters the hood (5) from below.

12. Method for controlling an installation according to one of claims 1 to 11,
**characterised in that**
the extraction system (12) connected to the upper extraction openings (7) is controlled in such a way that activity of the extraction system (12) is coordinated with the opening and closing of the upper closure element (10) and/or the charging state of the chute (9).

## Revendications

1. Installation de métallurgie de fusion,
- dans laquelle l'installation de métallurgie de fusion a un four ( 1 ) de fusion pour la fusion de riblons ( 2 ) métalliques et, disposée au-dessus du four ( 1 ) de fusion, une zone ( 3 ) de chargement du four ( 1 ) de fusion,
- dans laquelle l'installation de métallurgie de fusion a un élément ( 4 ) de chargement qui, empli de riblons ( 2 ) métalliques destiné au four ( 1 ) de fusion, peut entrer suivant un sens ( x ) de déplacement dans la zone ( 3 ) de chargement, peut y être vidé et à l'état vidé peut, dans le sens contraire au sens ( x ) de déplacement, être ressorti de la zone ( 3 ) de chargement,
- la zone ( 3 ) de chargement est entourée d'une hotte ( 5 ) de manière à ce que la zone ( 3 ) de chargement, y compris l'élément ( 4 ) de chargement qui a été mis dans la zone ( 3 ) de chargement, soit fermée en haut et latéralement,
- la hotte ( 5 ) a un certain nombre d'ouvertures ( 7 ) supérieures d'aspiration, par lesquelles des gaz perdus et de la poussière se produisant dans la hotte ( 5 ) peuvent être aspirés de la hotte ( 5 ),
- entre le four ( 1 ) de fusion et la zone ( 3 ) de chargement est disposé, pour la réception et le préchauffage des riblons ( 2 ) métalliques, un puits ( 9 ) dans lequel les riblons ( 2 ) métalliques sont transportés lorsque l'élément ( 4 ) de chargement est vidé,
- le puits ( 9 ) a un élément ( 10 ) supérieur de fermeture tourné vers la zone ( 3 ) de chargement et pouvant être, pour le transport des riblons ( 2 ) métalliques dans le puits ( 3 ), ouvert et ensuite refermé et le puits ( 9 ) a, tourné vers le four ( 1 ) de fusion, un élément ( 11 ) inférieur de fermeture pouvant être ouvert pour le chargement des riblons ( 2 ) métalliques du puits ( 9 ) dans le four ( 1 ) de fusion et ensuite être refermé et
- dans laquelle un système ( 12 ) d'aspiration, raccordé aux ouvertures ( 7 ) supérieures d'aspiration, peut être commandé de manière à pouvoir être coordonné avec l'ouverture et la fermeture de l'élément ( 10 ) supérieur de fermeture et/ou avec l'état de chargement du puits ( 9 ).

2. Installation suivant la revendication 1,
**caractérisée**
**en ce que** les ouvertures ( 7 ) supérieures d'aspiration sont disposées dans la partie supérieure de la hotte ( 5 ).

3. Installation suivant la revendication 1 ou 2,
**caractérisée**
**en ce que** les ouvertures ( 7 ) supérieures d'aspiration sont disposées des deux côtés d'un plan ( 8 ) vertical défini par le sens ( x ) de déplacement de l'élément ( 4 ) de chargement.

4. Installation suivant la revendication 1, 2 ou 3,
**caractérisée**
**en ce que** le puits ( 9 ) est disposé de manière excentrée par rapport au four ( 1 ) de fusion au-dessus du four ( 1 ) de fusion.

5. Installation suivant l'une des revendications 1 à 4,
**caractérisée**
**en ce qu'**il est disposé dans le puits ( 9 ) en-dessous de l'élément ( 10 ) supérieur de fermeture un certain nombre d'ouvertures ( 13 ) inférieures d'aspiration, par lesquelles des gaz perdus et de la poussière se produisant dans le puits ( 9 ) peuvent être aspirés du puits ( 9 ).

6. Installation suivant la revendication 5,
**caractérisée**
**en ce que** les ouvertures ( 13 ) inférieures d'aspiration sont disposées des deux côtés d'un plan ( 8 ) verticale défini par le sens ( x ) de déplacement de l'élément ( 4 ) de chargement.

7. Installation suivant la revendication 5 ou 6,
**caractérisée**
**en ce que** les ouvertures ( 7, 13 ) supérieures et inférieures d'aspiration communiquent avec le même dispositif ( 14 ) d'aspiration et en ce que des volets ( 16 ) de fermeture réglables sont montés dans des tuyaux ( 15 ) de liaison entre les ouvertures ( 7 ) supérieures d'aspiration et le dispositif ( 14 ) d'aspiration.

8. Installation suivant la revendication 7,
**caractérisée**
**en ce que** des volets ( 18 ) de fermeture réglables sont montés aussi dans des tuyaux ( 17 ) de liaison entre les ouvertures ( 13 ) inférieures d'aspiration et le dispositif ( 14 ) d'aspiration.

9. Installation suivant la revendication 8,
**caractérisée**
**en ce que** des entraînements ( 19 ) de réglage des volets ( 16 ) de fermeture, montés entre les ouvertures ( 7 ) supérieures d'aspiration et le dispositif ( 14 ) d'aspiration peuvent être commandés indépendamment d'entraînements ( 20 ) de réglage des volets ( 18 ) de fermeture, montés entre les ouvertures ( 13 ) inférieures d'aspiration et le dispositif ( 14 ) d'aspiration.

10. Installation suivant l'une des revendications 1 ou 9,
**caractérisée**
**en ce que** le sens ( x ) de déplacement est incliné de bas en haut, qu'il est prévu dans la hotte ( 5 ) une ouverture ( 6 ) de passage pour l'entrée et la sortie de l'élément ( 4 ) de chargement et en ce que la section transversale de l'ouverture ( 6 ) de passage peut être réduite lorsque l'élément ( 4 ) de chargement est entré dans la hotte ( 5 ), l'ouverture ( 6 ) de passage pouvant être notamment fermée.

11. Installation suivant l'une des revendications 1 à 10,
**caractérisée**
**en ce que** le sens ( x ) de déplacement est incliné de bas en haut et en ce que la hotte ( 5 ) s'étend si loin dans la direction horizontale que l'élément ( 4 ) de chargement entre dans la hotte ( 5 ) par le bas.

12. Procédé de commande d'une installation suivant l'une des revendications 1 à 11,
**caractérisé**
**en ce que** l'on commande le système ( 12 ) d'aspiration raccordé aux ouvertures ( 7 ) supérieures d'aspiration de manière à coordonner une activité du système ( 12 ) d'aspiration avec l'ouverture et la fermeture de l'élément ( 10 ) supérieur de fermeture et/ou avec l'état de chargement du puits ( 9 ).
